# EUROPEAN PATENT APPLICATION

(11) **EP 1 894 744 A1**
(43) Date of publication of application: **05.03.2008**
(21) Application number: 07015759.9
(22) Date of filing: 10.08.2007
(51) Int. Cl.: B60B 21/06, B60B 1/04

(54) **Rim for a bicycle spoked wheel and relative spoked wheel**

(30) Priority: 01.09.2006 IT MI20061669
(71) Applicant: CAMPAGNOLO S.r.l., 36100 Vicenza (VI) (IT)
(72) Inventor: Urbani, Davide, 36075 Montecchio Maggiore - VI (IT)
(74) Representative: Riccardi, Elisa

(57) **Abstract**

A rim (2) for a bicycle spoked wheel (1) is disclosed, comprising spoke attachment areas (6) and infra-spoke areas (7), wherein the radial section of the rim in a central part (8) of the infra-spoke areas has a greater moment of inertia than the radial section of the rim in lateral parts (9) of the infra-spoke areas (7). It is thus possible to increase the stiffness of the rim (2) to counteract the daisy effect.

## Description

The present invention refers to a rim for a bicycle spoked wheel and to a bicycle spoked wheel comprising such a rim.

It is known that bicycle spoked wheels are formed of a peripheral crown or rim, a central hub and a plurality of spokes connecting the hub to spoke attachment areas of the rim.

The stiffness of a rim is critical in terms of the so-called "daisy effect", which consists in that when the spokes are tensioned to make the wheel, the rim deforms with a local reduction in the diameter of the wheel at the spokes or at groups of spokes closely spaced apart, namely in the spoke attachment areas. In the portions without spokes or groups of spokes, called infra-spoke areas, such a reduction in diameter occurs less or does not occur at all or even there is an increase in diameter. The result is that the wheel is seen to "expand" in the radial direction in the infra-spoke areas. In such infra-spoke areas, the rim, not being held by the spokes, must with its own characteristics fulfil the requirement of stiffness required by the wheel so as not to be excessively deformable.

The aforementioned daisy effect is more accentuated in the case of spoking with groups of spokes, since there is a concentration of tensioning forces of the spokes and also the length of the infra-spoke areas increases.

To counteract the daisy effect, EP 1 316 442 B2 proposes a rim having a diameter initially greater at the spoke attachment areas than at the infra-spoke areas, which upon mounting the wheel is supposed to have a lesser daisy effect.

The object of the present invention is to provide a rim for bicycle wheels allowing the daisy effect to be reduced or avoided.

In a first aspect thereof, the invention concerns a rim for a bicycle spoked wheel, comprising spoke attachment areas and infra-spoke areas, characterised in that the radial section of the rim in a central part of the infra-spoke areas has a greater moment of inertia than the radial section of the rim in lateral parts of the infra-spoke areas.

By controlling the moment of inertia of each section of the rim, with respect to its neutral axis, it is possible to locally control the stiffness of the rim to counteract the daisy effect described above. The central part of the infra-spoke areas, having a comparatively high moment of inertia, indeed obtains a comparatively high stiffness, which allows its radial deformation when the spokes are tensioned between the rim and the hub to make the wheel to be reduced. Experimental tests have confirmed that the lateral parts of the infra-spoke areas are subject to less stress than the central part of the infra-spoke areas - and than the spoke attachment areas - during the tensioning of the spokes.

Again in order to locally control the stiffness of the rim, the radial section of the rim in the central part of the infra-spoke areas can also have a greater moment of inertia than the radial section of the rim in the spoke attachment areas. Said alternative may be preferable in the case of change of radial section obtained through change of thickness, since the rim is particularly light.

The radial section of the rim in the lateral parts of the infra-spoke areas can have a moment of inertia less than or equal to the radial section of the rim in the spoke attachment areas.

Alternatively, the radial section of the rim in the spoke attachment areas can have a moment of inertia equal to or greater than the radial section of the rim in the central parts of the infra-spoke areas. The spoke attachment areas therefore have a comparatively large stiffness that allows the radial deformation in the spoke attachment areas themselves to be reduced and consequently allows the radial deformation in the infra-spoke areas, when the spokes are tensioned between the rim and the hub to make the wheel, to be further reduced.

In an embodiment, the change of moment of inertia is accomplished through a change of radial extent of the rim.

Such a change can advantageously be obtained by hydroforming.

In particular, the change of radial extent consists of a change of length and sloping of two opposite side walls of the rim. In the present description and in the attached claims, the expression "opposite side walls" should not be construed as be limited to side walls that mirror one another with respect to a middle plane of the rim.

Preferably, the change of moment of inertia is accomplished through a change of thickness of the rim. In this way, the desired stiffness of the rim can be accompanied by a reduced weight of the rim itself.

More preferably, the change of moment of inertia is accomplished through a change of thickness of a lower bridge, or radially inner wall, of the rim.

The change of thickness from an area having a comparatively high moment of inertia to an area having a comparatively low moment of inertia can for example be stepped or curvilinear or else it can take place forming an undercut or by ramp change.

Said change of thickness can be carried out by removal of material in said lateral parts of the infra-spoke areas, more preferably by milling, in the case of a rim made of a metallic material.

In the case of a rim made of a composite material, said change of thickness is preferably carried out through input of a different amount of composite material in a suitably-shaped mould cavity.

The change of moment of inertia can also be accomplished through a change of the radial extent of the rim and a change of thickness of the rim.

Preferably, the change of extent is carried out by hydroforming and the change of thickness is carried out by removal of material.

The radial section of the rim can change abruptly, for example to maximise the reduction in thickness and thus minimise the weight of the rim.

Alternatively, the radial section of the rim can gradually change along the circumference, namely without abrupt changes of section.

Typically, the rim comprises two opposite side walls and a lower bridge extending between the two opposite side walls.

Typically, the rim further comprises an upper bridge, extending between the two opposite side walls radially outside the lower bridge.

In a second aspect thereof, the invention concerns a bicycle spoked wheel, comprising a rim as described above, a hub and a plurality of spokes extending and tensioned between the rim and the hub.

The invention shall now be better described with reference to some embodiments thereof, illustrated merely as a non-limiting example in the attached drawings, wherein:
- FIG. 1 shows the isometric view of a wheel with a rim according to a first embodiment of the invention;
- FIG. 2 shows a side view of the rim according to the first embodiment of the invention;
- FIGS. 3-6 show radial sections, respectively along the planes C-C or C'-C', D-D, E-E, F-F, of the rim of FIG. 2;
- FIG. 7 shows the isometric view of a wheel with a rim according to a second embodiment of the invention;
- FIG. 8 shows a side view of the rim according to the second embodiment of the invention;
- FIGS. 9-12 show radial sections, respectively along the planes C-C or C'-C', D-D, E-E, F-F of the rim of FIG. 8;
- FIG. 13 shows the isometric view of a wheel with a rim according to a third embodiment of the invention;
- FIG. 14 shows a side view of the rim according to the third embodiment of the invention;
- FIGS. 15-18 show radial sections, respectively along the planes C-C or C' -C' , D-D, E-E, F-F, of the rim of FIG. 14;
- FIG. 19 shows the isometric view of a wheel with a rim according to a fourth embodiment of the invention;
- FIG. 20 shows a side view of the rim according to the fourth embodiment of the invention;
- FIGS. 21-24 show radial sections, respectively along the planes C-C or C'-C', D-D, E-E, F-F, of the rim of FIG. 20;
- FIG. 25 shows the isometric view of a wheel with a rim according to a fifth embodiment of the invention;
- FIG. 26 shows a side view of the rim according to the fifth embodiment of the invention;
- FIGS. 27-30 show radial sections, respectively along the planes C-C, D-D, E-E, F-F, of the rim of FIG. 26;
- FIG. 31 shows the isometric view of a wheel with a rim according to a sixth embodiment of the invention;
- FIG. 32 shows a side view of the rim according to the sixth embodiment of the invention;
- FIGS. 33-36 show radial sections, respectively along the planes C-C, D-D, E-E, F-F, of the rim of FIG. 32;
- FIG. 37 shows the isometric view of a wheel with a rim according to a seventh embodiment of the invention;
- FIG. 38 shows a side view of the rim according to the seventh embodiment of the invention;
- FIGS. 39-42 show radial sections, respectively along the planes C-C, D-D, E-E, F-F, of the rim of FIG. 38;
- FIG. 43 shows the isometric view of a wheel with a rim according to an eighth embodiment of the invention;
- FIG. 44 shows a side view of the rim according to the eighth embodiment of the invention;
- FIGS. 45-48 show radial sections, respectively along the planes C-C, D-D, E-E, F-F, of the rim of FIG. 44;
- FIG. 49 shows the isometric view of a wheel with a rim according to a ninth embodiment of the invention;
- FIG. 50 shows a side view of the rim according to the ninth embodiment of the invention;
- FIGS. 51-54 show radial sections, respectively along the planes C-C, D-D, E-E, F-F, of the rim of FIG. 50;
- FIG. 55 shows the isometric view of a wheel with a rim according to a tenth embodiment of the invention;
- FIG. 56 shows a side view of the rim according to the tenth embodiment of the invention;
- FIGS. 57-60 show radial sections, respectively along the planes C-C, D-D, E-E, F-F, of the rim of FIG. 56;
- FIGS. 61-64 show some shapes of transitions between areas of a rim according to the invention;
- FIG. 65 shows various sections of a rim and/or of a rim precursor according to the invention, superimposed; and
- FIGS. 66-71 show various steps of a manufacturing process of a rim according to the invention.

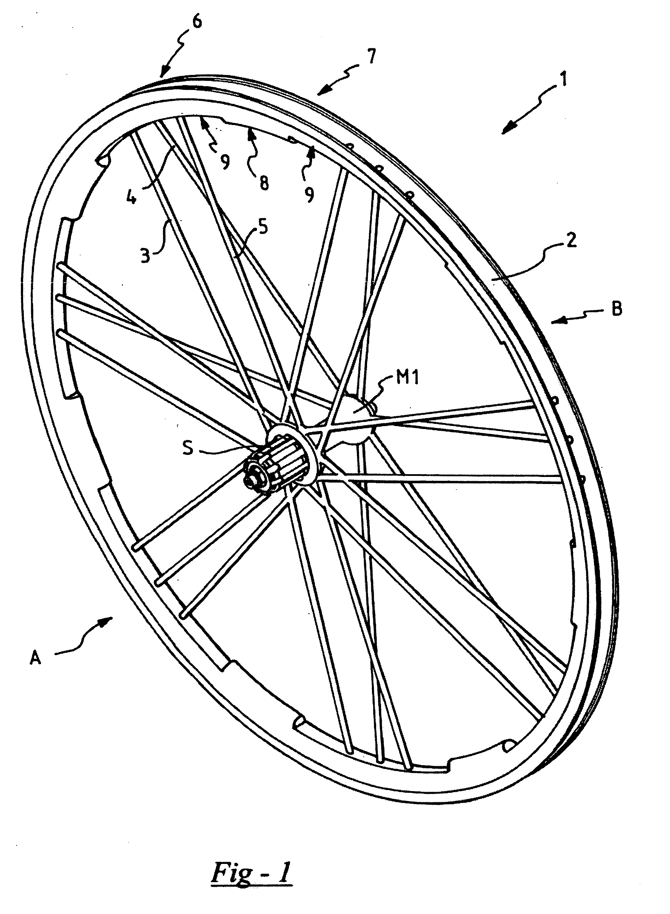

FIG. 1 shows a wheel 1 with a rim 2 according to a first embodiment of the invention.

Wheel 1 is a rear wheel with seven triplets each comprising three spokes 3, 4, 5 tensioned between a hub M1 and seven spoke attachment areas 6 of the rim 2.

In the wheel 1 and respectively in the rim 2 two sides A, B are defined, the first on the side of a sprocket-carrying body S fixed to the hub M1 and the second on the opposite side.

The fourteen lateral spokes 3, 5 of each triplet extend tangentially from the hub M1 on the first side A, while the seven central spokes 4 of each triplet extend radially from the hub M1 on the second side B. The spokes 3, 5 on the first side A are therefore twice (fourteen) the spokes 4 on the second side B (seven).

Between adjacent spoke attachment areas 6, the rim 2 has seven infra-spoke areas 7, each having a central part 8 and two lateral parts 9.

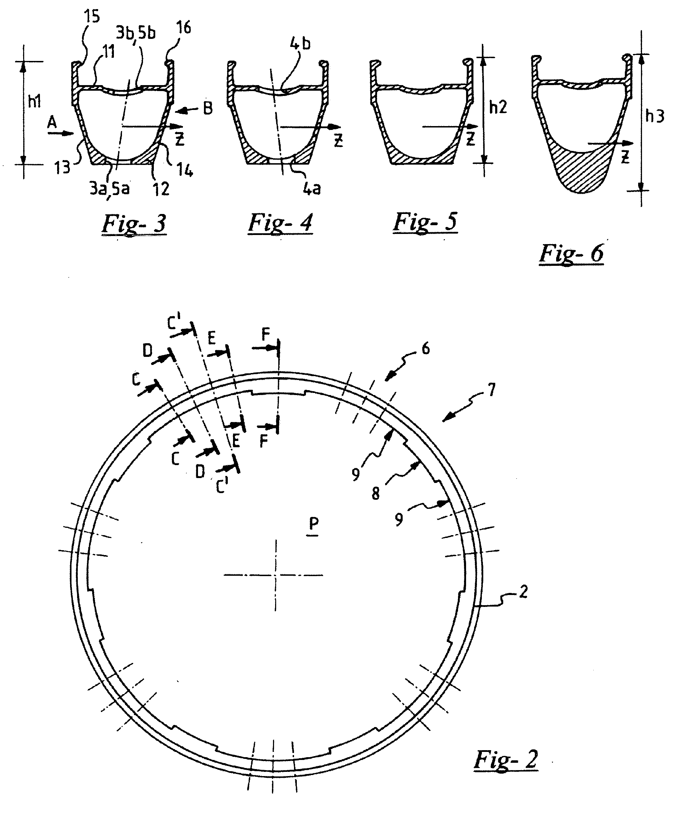

With reference to FIGS. 3-6, which show radial sections of the rim 2 respectively along the planes C-C or C'-C', D-D, E-E, F-F of FIG. 2, the rim 2 has a variable radial section.

The rim 2 has a radially outer upper bridge 11, a radially inner lower bridge 12 and two side walls 13, 14 that form wings 15, 16 for holding the tyre. The change of radial section of the rim 2 consists in a change of thickness of the lower bridge 12, as described more clearly hereafter.

In the spoke attachment areas 6, the rim 2 has a section of comparatively short radial extent h1, as shown in FIGS. 3 and 4, which show sections carried out along the planes C-C or C'-C' and along the plane D-D of FIG. 2, respectively. For example, the radial extent h1 of the rim 2 in the spoke attachment areas 6 can amount to 23.7 mm.

More specifically, in the spoke attachment areas 6 the rim 2 receives the lateral spokes 3, 5 of each triplet in respective holes 3a, 5a slightly sloping towards the first side A of the wheel 1, as shown in FIG. 3. Again in the spoke attachment areas 6, the rim 2 receives the central spoke 4 of each triplet in a respective hole 4a slightly sloping towards the second side B of the wheel 1, as shown in FIG. 4.

The spoke attachment holes 3a, 4a, 5a are made in the lower bridge 12.

On the upper bridge 11 of the rim 2, coaxially with the holes 3a, 4a, 5a, openings 3b, 4b, 5b for the passage of the nipples used to attach and tension the spokes 3, 4, 5 are optionally made. The openings are displaced with respect to the middle plane P of the rim 2, in particular the openings 3b, 5b for the lateral spokes 3, 5 of each triplet are displaced towards the second side B of the wheel 1 (FIG. 3) and the openings 4b for the central spokes 4 of each triplet are displaced towards the first side A of the wheel 1 (FIG. 4). The openings 3b, 4b, 5b at each spoke attachment area 6 could be replaced by a single opening, or they could be completely lacking, for example in rims of the type described in EP 1418064 A1 to the same Applicant.

Also in the lateral parts 9 of the infra-spoke areas 7, the rim 2 has a section of comparatively short radial extent h2, as shown in FIG. 5, which shows a section carried out along the plane E-E of FIG. 2. The radial extent h2 is preferably equal to the radial extent h1 at the spoke attachment areas 6. For example, the radial extent h2 of the rim 2 in the lateral parts 9 of the infra-spoke areas 7 can amount to 23.7 mm.

In the central parts 8 of the infra-spoke areas 7, on the other hand, the rim 2 has a radial section of comparatively long radial extent h3, as shown in FIG. 6, which shows a section carried out along the plane F-F of FIG. 2. More specifically, in the central parts 8 of the infra-spoke areas 7 the lower bridge 12 is thicker with respect to the spoke attachment areas 6 and the lateral parts 9 of the infra-spoke areas 7. For example, the radial extent h3 of the rim 2 in the central parts 8 of the infra-spoke areas 7 can amount to 26 mm.

In the infra-spoke areas 7, the central part 8 has a moment of inertia, with respect to the neutral axis z, that is greater than the moment of inertia of the lateral parts 9, as well as than the moment of inertia of the spoke attachment areas 6.

Therefore, there is an improvement in the stiffness of the rim 2 in the central parts 8 of the infra-spoke areas 7, caused precisely by the increased moment of inertia with respect to axis z due to the increased radial extent h3 of the rim 2 and to the increased thickness of the lower bridge 12 and therefore its increased mass, compared with the lateral parts 9 of the infra-spoke areas 7 and with the spoke attachment areas 6. The increased moment of inertia in the central parts 8 of the infra-spoke areas 7 allows their radial deformation and consequently the radial deformation in the entire infra-spoke areas 7, when the spokes 3, 4, 5 are mounted between the rim 2 and the hub M1 and tensioned to make the wheel 1, to be reduced with a consequent reduction of the daisy effect described in the introductory portion of the present description. Experimental tests have confirmed that the lateral parts 9 of the infra-spoke areas 7 are subject to less stress than the central parts 8 of the infra-spoke areas 7 during the tensioning of the spokes 3, 4, 5.

The rim 2 is also particularly light.

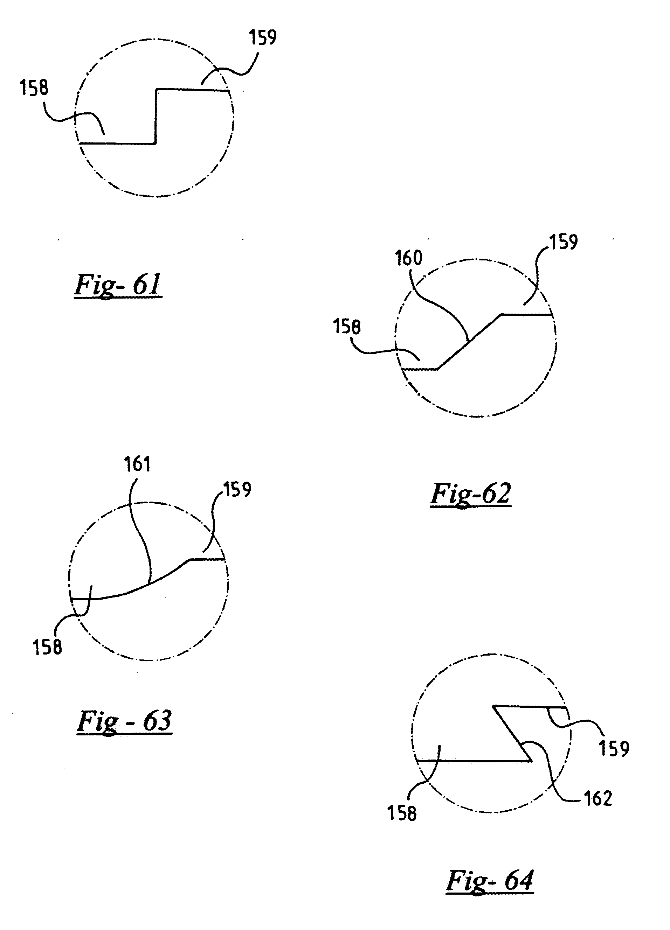

According to what is depicted in FIG. 1, the radial section of the rim 2 changes between the significant sections shown in FIGS. 3-6 and described above in an abrupt or sudden manner. Alternatively, it is however possible to carry out even much more gradual changes of radial section. Some examples of changes of section shall be illustrated hereafter with reference to FIGS. 61-64.

The circumferential extent of each lateral part 9 of each infra-spoke area 7 is shown as about equal to the circumferential extent of the central part 8 of the infra-spoke area 7, but the mutual sizing of the lateral parts 9 and of the central part 8 of the infra-spoke areas 7, as well as of the spoke attachment areas 6, shall be suitably selected also based upon the diameter of the rim 2 and/or the number of groups of spokes 3-5.

The change of thickness designed to provided the change of moment of inertia according to the invention can, alternatively or in addition, be carried out in one or both of the side walls 13, 14 and/or in the upper bridge 11.

In particular, in the case of a rim 2 made of a metallic material, the change of thickness can be carried out, starting from a rim precursor with constant radial section equal to the section of the central parts 8 of the infra-spoke areas 7, by removal of material at the lateral parts 9 of the infra-spoke areas 7 and at the spoke attachment areas 6. The removal of material can for example take place by milling.

When abrupt changes of thickness of the lower bridge 12 are desired, the process described in patent application EP 1 491 362 A1**,** to the same Applicant, can be advantageously used.

In the case of a rim made of a composite material, the change of thickness designed to provide the change of moment of inertia according to the invention is preferably carried out through input of a different amount of composite material in a suitably shaped mould cavity.

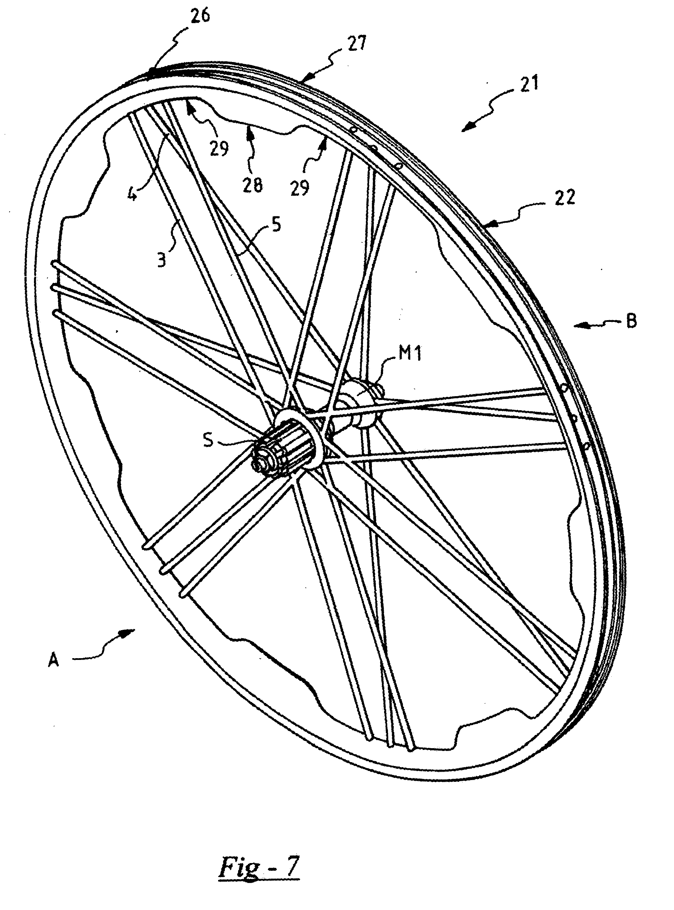

FIGS. 7-12 show views, corresponding to FIGS. 1-6, of a wheel 21 with a rim 22 according to a second embodiment of the invention, which shall only be described in what differs from the first embodiment.

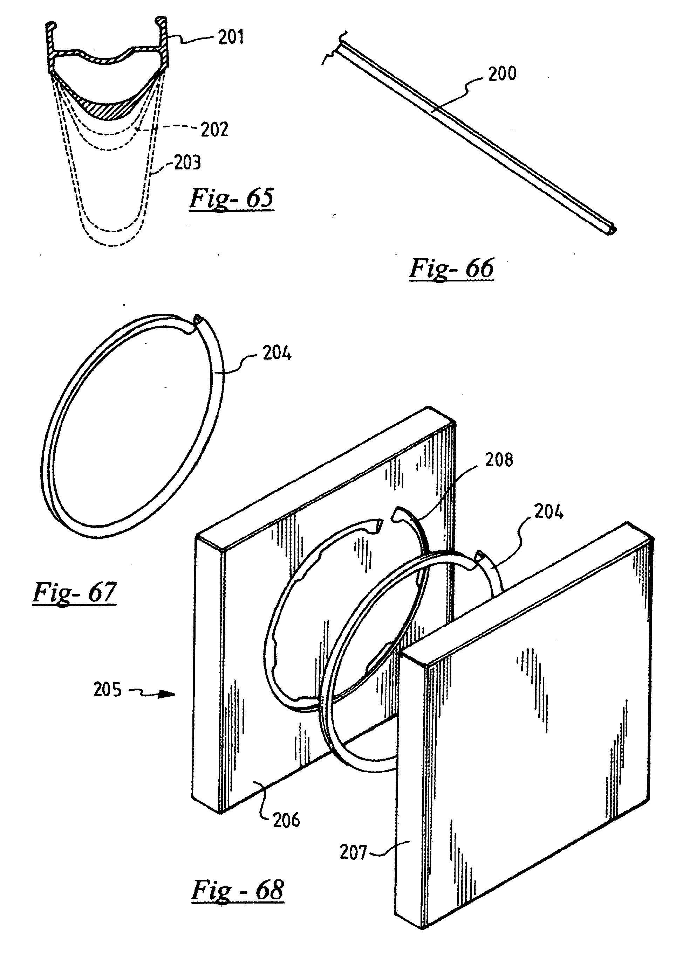

The rim 22 has a radial section of variable moment of inertia in the terms described above with reference to the first embodiment. The change of moment of inertia is however obtained by deformation, in particular through the hydroforming process described hereafter with reference to FIGS. 65-71.

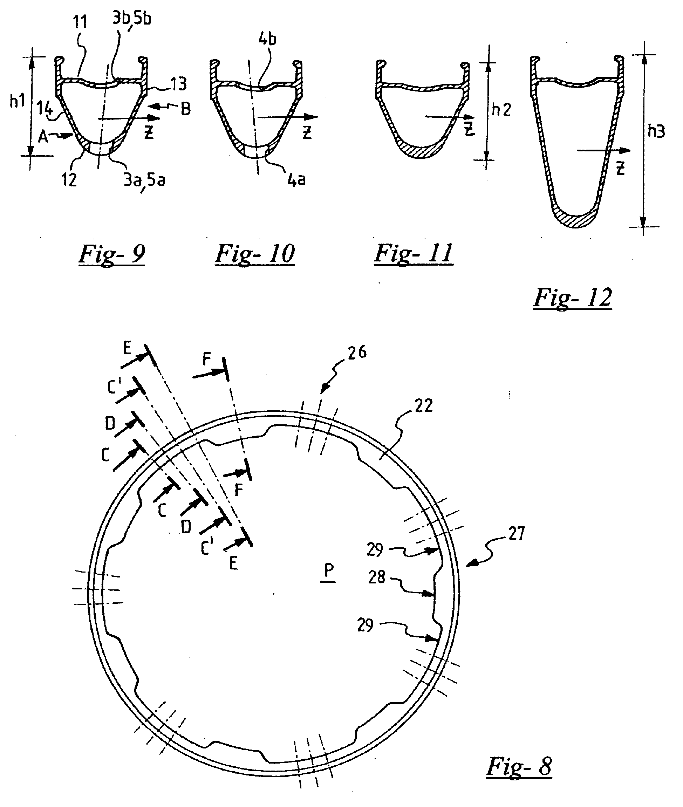

More specifically, in the central parts 28 of the infra-spoke areas 27 - FIG. 12, which shows a section along the plane F-F of FIG. 8 - the side walls 13, 14 are longer and less sloping than the lateral parts 29 of the infra-spoke areas 27 - FIG. 11, which shows a section along the plane E-E of FIG. 8 - and than the spoke attachment areas 26 - FIGS. 9 and 10, which show sections along the planes C-C or C'-C' and D-D of FIG. 8 -.

Therefore, there is an improvement in the stiffness of the rim 22 in the central parts 28 of the infra-spoke areas 27, caused by the increased moment of inertia with respect to axis z due to the increased radial extent h3 of the rim 22, compared with the lateral parts 29 of the infra-spoke areas 27 and with the spoke attachment areas 26.

The rim 22 has an area of the cross section - namely of the upper bridge 11, of the lower bridge 12 and of the side walls 13, 14 - that is substantially constant along the entire circumference, apart from the holes 3a, 4a, 5a themselves and the openings 3b, 4b, 5b where provided for. Therefore, the weight of the rim 72 is evenly distributed along the entire circumference.

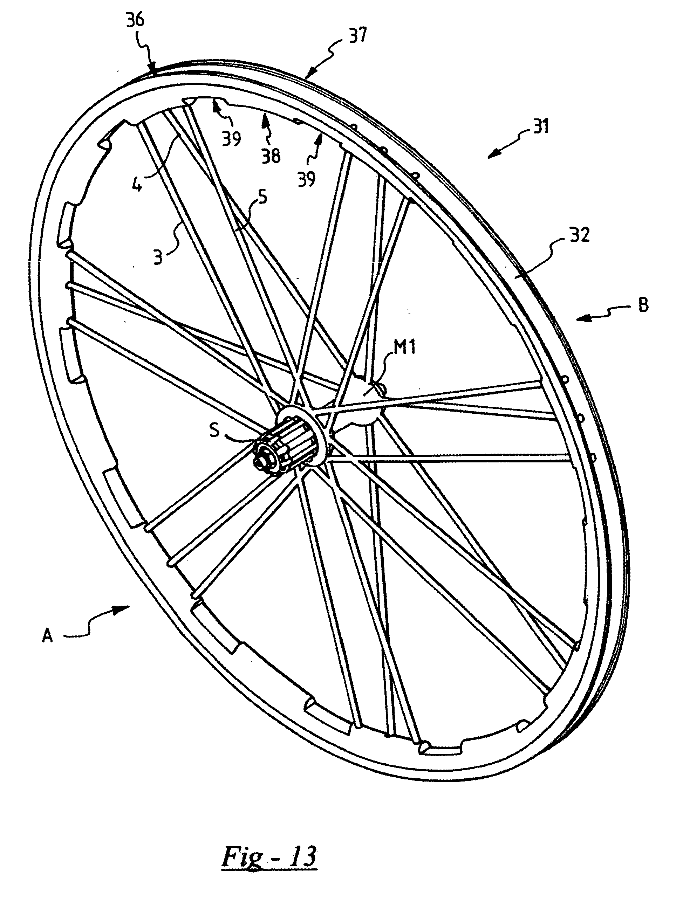

FIG. 13 shows a wheel 31 with a rim 32 according to a third embodiment of the invention.

The wheel 31 is a rear wheel having the same spoking as the first embodiment described above. The wheel 31 indeed comprises seven triplets each comprising three spokes 3, 4, 5 tensioned between a hub M1 and seven spoke attachment areas 36 of the rim 32. Between adjacent spoke attachment areas 36, the rim 32 has seven infra-spoke areas 37, each having a central part 38 and two lateral parts 39.

The fourteen lateral spokes 3, 5 of each triplet extend tangentially from the hub M1 on the first side A, while the seven central spokes 4 of each triplet extend radially from the hub M1 on the second side B.

With reference to FIGS. 15-18, which show radial sections of the rim 32 respectively along the planes C-C or C'C', D-D, E-E, F-F of FIG. 14, the rim 32 has a variable radial section and more specifically has a change of thickness of the lower bridge 12.

In the spoke attachment areas 36, the section of the rim 32 is of comparatively long radial extent h4, for example 26 mm.

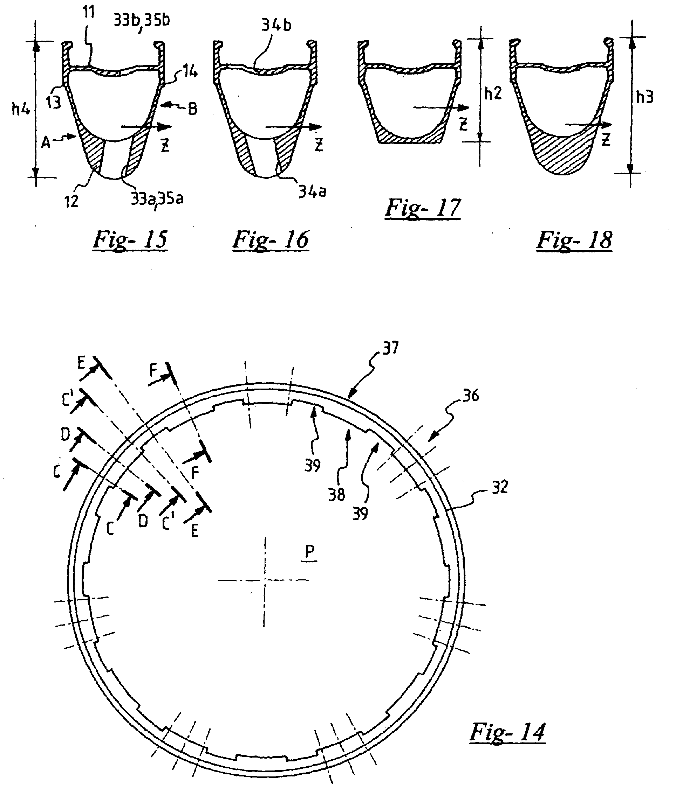

More specifically, in the spoke attachment areas 36 the rim 32 receives the lateral spokes 3, 5 of each triplet in respective holes 33a, 35a slightly sloping towards the first side A of the wheel 31, as shown in FIG. 15, and receives the central spoke 4 of each triplet in a respective hole 34a slightly sloping towards the second side B of the wheel 31, as shown in FIG. 16.

The spoke attachment holes 33a, 34a, 35a are made in the lower bridge 12.

On the upper bridge 11 of the rim 32, coaxially with the holes 33a, 34a, 35a, openings 33b, 34b, 35b for the passage of the nipples used to attach and tension the spokes 3, 4, 5 are optionally made.

In the lateral parts 39 of the infra-spoke areas 37, the rim 32 has a section of comparatively short radial extent h2, as shown in FIG. 17, which shows a section carried out along the plane E-E of FIG. 14. For example, the radial extent h2 of the rim 32 in the lateral parts 39 of the infra-spoke areas 37 can amount to 23.7 mm.

In the central parts 38 of the infra-spoke areas 37, the rim 32 has a radial section of comparatively long radial extent h3, for example 26 mm, as shown in FIG. 18, which shows a section carried out along the plane F-F of FIG. 14.

More specifically, in the lateral parts 39 of each infra-spoke area 37 the lower bridge 12 is thinner, and in the central parts 38 of the infra-spoke areas 37 and in the spoke attachment areas 36 the lower bridge 12 is thicker.

The radial extent h3 at the central parts 38 of the infra-spoke areas 37 is equal to the radial extent h4 at the spoke attachment areas 36.

It should however be understood that the section in the central parts 38 of the infra-spoke areas 37 could have a different extent than the spoke attachment areas 36.

As can be seen in FIG. 13, the radial section of the rim 32 changes between the significant sections shown in FIGS. 15-18 and described above in an abrupt or sudden manner, but also in this case even substantially more gradual changes are possible.

The central parts 38 of the infra-spoke areas 37 and the spoke attachment areas 36 have a moment of inertia, with respect to the neutral axis z, that is greater than the moment of inertia of the lateral parts 39 of each infra-spoke area 37.

There is therefore an improvement in the stiffness of the rim 32 in the central part 38 of the infra-spoke areas 37, as well as in the spoke attachment areas 36, caused precisely by the increased moment of inertia with respect to axis z due to the increased radial size of the rim 32 and to the increased thickness of the lower bridge 12 and therefore its increased mass, compared with the lateral parts 39 of the infra-spoke areas 37.

The increased moment of inertia in the central part 38 of each infra-spoke area 37 - and in the spoke attachment area 36 - allows the radial deformation of such areas and consequently of the entire infra-spoke areas 37, when the spokes 3, 4, 5 are mounted between the rim 32 and the hub M1 and tensioned to make the wheel 31, to be reduced with a consequent reduction in the daisy effect.

The rim 31 according to the third embodiment of the invention can be obtained as described above with reference to the first embodiment.

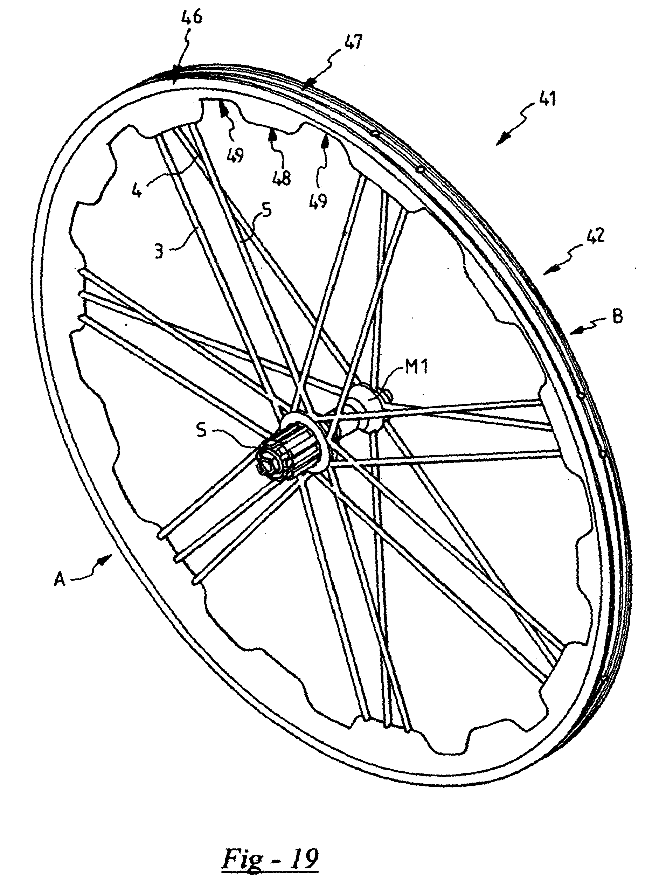

FIGS. 19-24 show views, corresponding to FIGS. 13-18, of a wheel 41 with a rim 42 according to a fourth embodiment of the invention, which shall only be described in what differs from the third embodiment.

The rim 42 has a radial section of variable moment of inertia in the terms described above with reference to the third embodiment. The change of moment of inertia is however obtained by deformation, in particular by hydroforming.

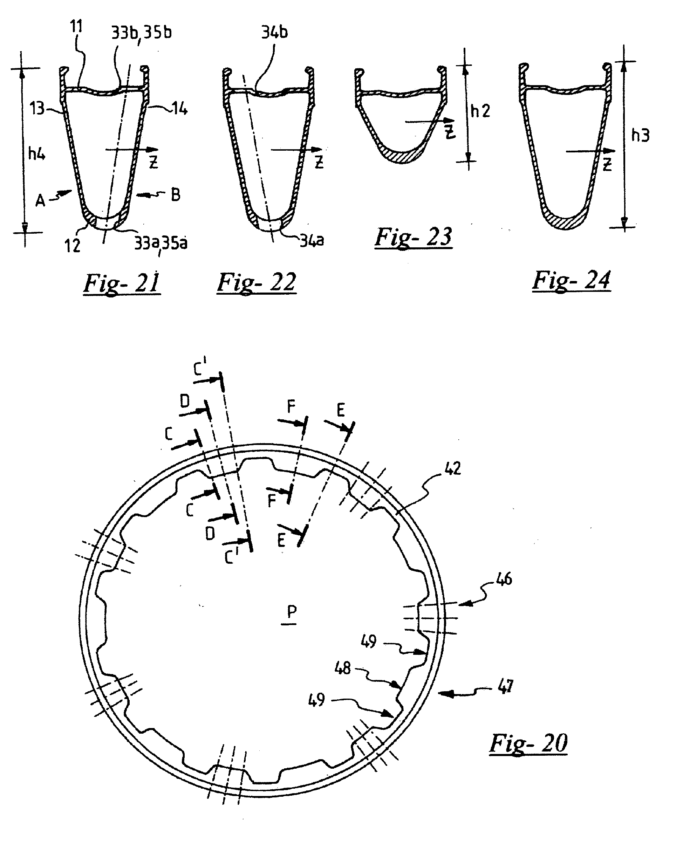

More specifically, in the central parts 48 of the infra-spoke areas 47 - FIG. 24, which shows a section along the plane F-F of FIG. 20 - the side walls 13, 14 are longer and less sloping than the lateral parts 49 of the infra-spoke areas 47 - FIG. 23, which shows a section along the plane E-E of FIG. 20 - and than the spoke attachment areas 46 - FIGS. 21 and 22, which show sections along the planes C-C or C'-C' and D-D of FIG. 20 -.

There is therefore an improvement in the stiffness of the rim 42 in the central parts 48 of the infra-spoke areas 47 and in the spoke attachment areas 46, caused by the increased moment of inertia with respect to axis z due to the increased radial extent h3 of the rim 42, compared with the lateral parts 49 of the infra-spoke areas 47.

The rim 42 has an area of the cross section - namely of the upper bridge 11, of the lower bridge 12 and of the side walls 13, 14 - that is substantially constant along the entire circumference, apart from the holes 33a, 34a, 35a themselves and the openings 33b, 34b, 35b where provided for. Therefore, the weight of the rim 42 is evenly distributed along the entire circumference.

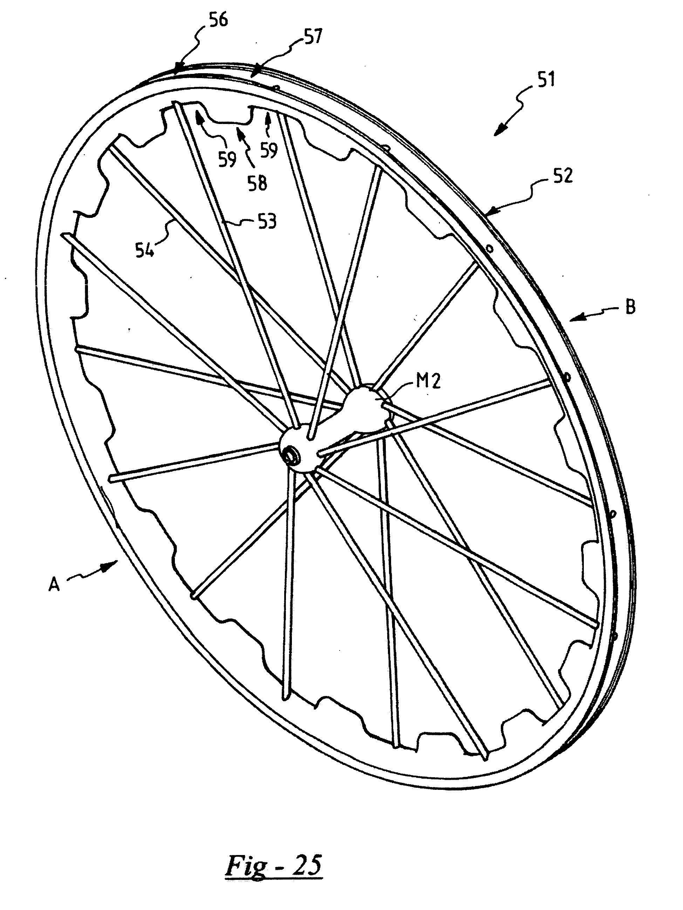

FIG. 25 shows a wheel 51 with a rim 52 according to a fifth embodiment of the invention.

The wheel 51 is a front wheel with sixteen spokes 53, 54 equally spaced apart, tensioned between a hub M2 and sixteen spoke attachment areas 56 of the rim 52. Between adjacent spoke attachment areas 56, the rim 52 has sixteen infra-spoke areas 57 each having a central part 58 and two lateral parts 59.

The eight spokes 53 extend radially from the hub M2 on the first side A, while the eight spokes 54 extend radially from the hub M2 on the second side B.

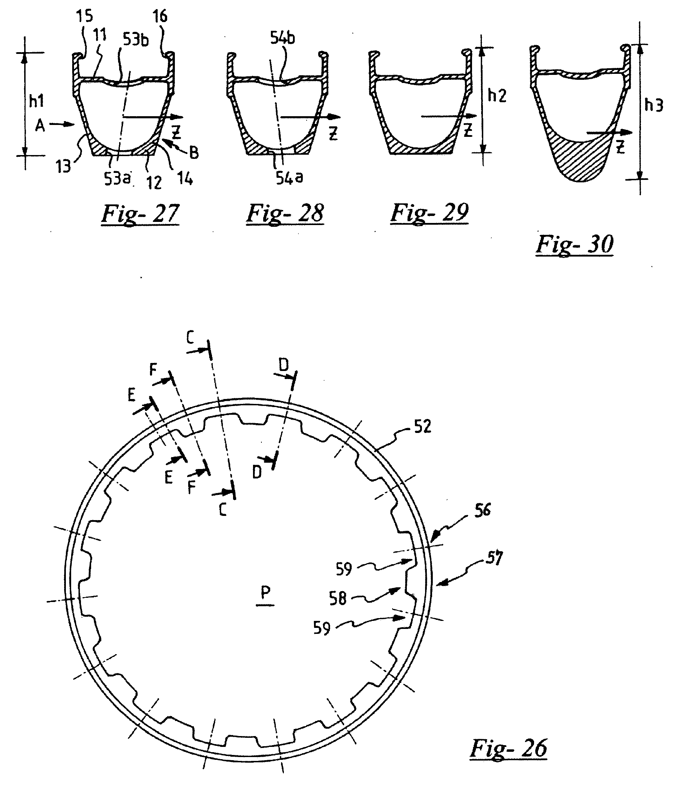

With reference to FIGS. 27-30, which show radial sections of the rim 52, respectively along the planes C-C, D-D, E-E, F-F of FIG. 26, the rim 52 has a variable radial section and more specifically has a change of thickness of the lower bridge 12.

In the spoke attachment areas 56, the rim 52 has a section of comparatively short radial extent h1. For example, the radial extent h1 of the rim 52 in the spoke attachment areas 56 can amount to 23.7 mm.

More specifically, in the spoke attachment areas 56 the rim 52 receives the spokes 53 on the first side A in respective holes 53a slightly sloping towards the first side A of the wheel 51, as shown in FIG. 27, and the spokes 54 in respective holes 54a slightly sloping towards the second side B of the wheel 51, as shown in FIG. 28.

The spoke attachment holes 53a, 54a are made in the lower bridge 12.

On the upper bridge 11 of the rim 2, coaxially with the holes 53a, 54a, openings 53b, 54b for the passage of the nipples used to attach and tension the spokes 53, 54 are optionally made.

Also in the lateral parts 59 of the infra-spoke areas 57, the rim 52 has a radial section of comparatively short radial extent h2, as shown in FIG. 29, which shows a section carried out along the plane E-E of FIG. 26. For example, the radial extent h2 of the rim 52 in the lateral parts 59 of the infra-spoke areas 57 can amount to 23.7 mm.

In the central parts 58 of the infra-spoke areas 57, the rim 52 has a radial section of comparatively long radial extent h3, for example 26 mm, as shown in FIG. 30, which shows a section carried out along the plane F-F of FIG. 26.

More specifically, in the lateral parts 59 of each infra-spoke area 57 and in the spoke attachment areas 56 the lower bridge 12 is thinner and in the central parts 58 of the infra-spoke areas 57 the lower bridge 12 is thicker.

The radial extent h2 at the lateral parts 59 of the infra-spoke areas 37 is equal to the radial extent h1 at the spoke attachment areas 56, but this is not strictly necessary.

As can be seen in FIG. 25, the radial section of the rim 52 changes between the significant sections shown in FIGS. 27-30 and described above in a gradual manner, but it can also abruptly change.

The central parts 58 of the infra-spoke areas 57 have a moment of inertia, with respect to the neutral axis z, that is greater than the moment of inertia of the lateral parts 59 of the infra-spoke areas 57 and of the spoke attachment areas 56.

There is therefore an improvement in the stiffness of the rim 52 in the infra-spoke areas 57 caused precisely by the increased moment of inertia with respect to axis z due to the increased radial size of the rim 52 and to the increased thickness of the lower bridge 12 and therefore its increased mass, compared with the lateral parts 59 of the infra-spoke areas 57 and with the spoke attachment areas 56. The increased moment of inertia in the central part 58 of each infra-spoke area 57 allows the radial deformation in the entire infra-spoke areas 57, when the spokes 53, 54 are mounted between the rim 52 and the hub M2 and tensioned to make the wheel 51, to be reduced with a consequent reduction of the daisy effect.

The rim 51 according to the fifth embodiment of the invention can be obtained as described above with reference to the first embodiment.

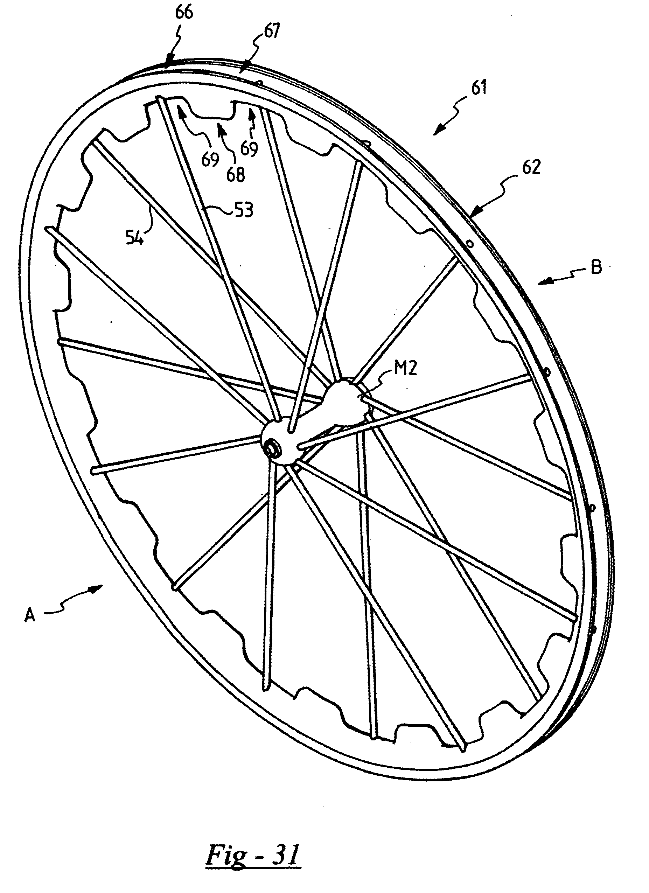

FIGS. 31-36 show views, corresponding to FIGS. 25-30, of a wheel 61 with a rim 62 according to a sixth embodiment of the invention, which shall only be described in what differs from the fifth embodiment.

The rim 62 has a radial section of variable moment of inertia in the terms described above with reference to the fifth embodiment. The change of moment of inertia is however obtained by deformation, in particular by hydroforming.

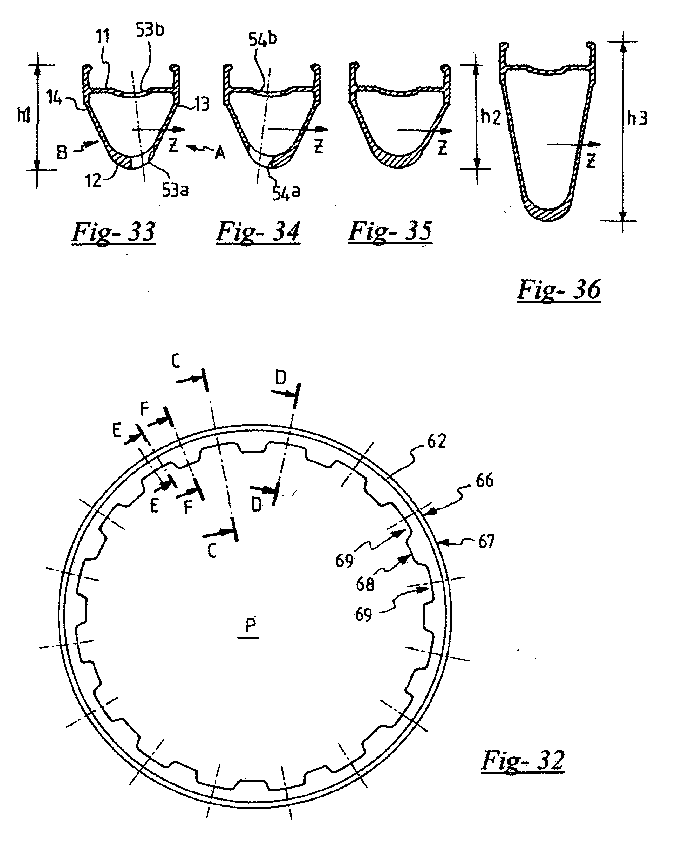

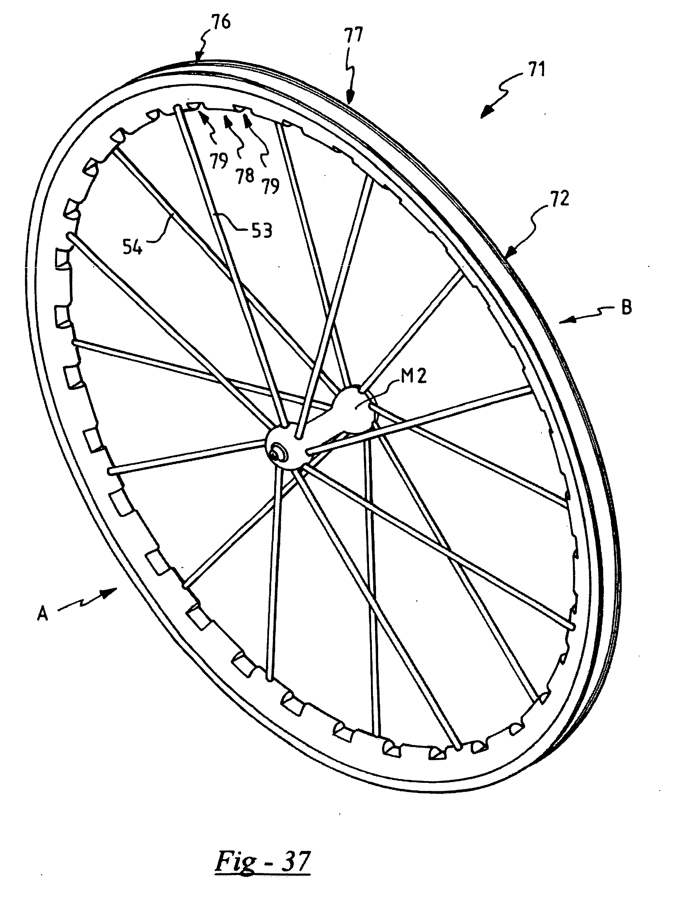

More specifically, in the central parts 68 of the infra-spoke areas 67 - FIG. 36, which shows a section along the plane F-F of FIG. 32 - the side walls 13, 14 are longer and less sloping than the lateral parts 69 of the infra-spoke areas 67 - FIG. 35, which shows a section along the plane E-E of FIG. 32 - and than the spoke attachment areas 66 - FIGS. 33 and 34, which show sections along the planes C-C and D-D of FIG. 32 -.

There is therefore an improvement in the stiffness of the rim 62 in the central parts 68 of the infra-spoke areas 67, caused by the increased moment of inertia with respect to axis z due to the increased radial extent h3 of the rim 62, compared with the lateral parts 69 of the infra-spoke areas 67 and with the spoke attachment areas 66.

The rim 62 has an area of the cross section - namely of the upper bridge 11, of the lower bridge 12 and of the side walls 13, 14 - that is substantially constant along the entire circumference, apart from the holes 53a, 54a themselves and the openings 53b, 54b where provided for. Therefore, the weight of the rim 62 is evenly distributed along the entire circumference.

FIG. 37 shows a wheel 71 with a rim 72 according to a seventh embodiment of the invention.

The wheel 71 is a front wheel having the same spoking as the fifth and sixth embodiments described above. The wheel 71 indeed comprises sixteen spokes 53, 54 equally spaced apart, tensioned between a hub M2 and sixteen spoke attachment areas 76 of the rim 72. Between adjacent spoke attachment areas 76, the rim 72 has sixteen infra-spoke areas 77, each having a central part 78 and two lateral parts 79.

The eight spokes 53 extend radially from the hub M2 on the first side A, while the eight spokes 54 extend radially from the hub M2 on the second side B.

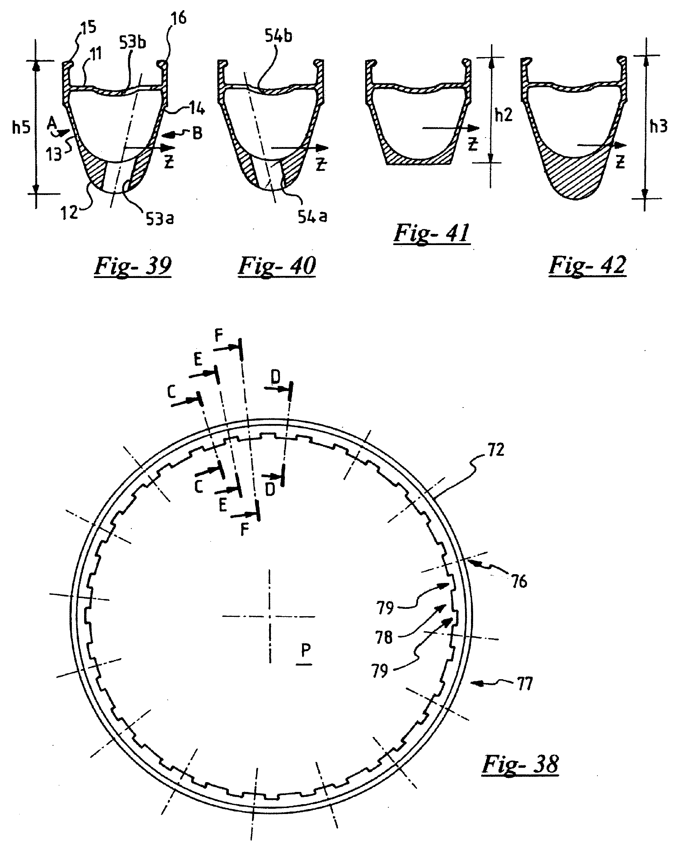

With reference to FIGS. 39-42, which show radial sections of the rim 72 respectively along the planes C-C, D-D, E-E, F-F of FIG. 38, the rim 72 has a variable radial section and more specifically has a change of thickness of the lower bridge 12.

In the central parts 78 of the infra-spoke areas 77, the rim 72 has a radial section of comparatively long radial extent h3, as shown in FIG. 42, which shows a section carried out along the plane F-F of FIG. 38. For example, the radial extent h3 of the rim 72 in the central parts 78 of the infra-spoke areas 77 can amount to 27 mm.

In the lateral parts 79 of the infra-spoke areas 77, the rim 72 has a section of comparatively short radial extent h2, as shown in FIG. 41, which shows a section carried out along the plane E-E of FIG. 38. For example, the radial extent h2 of the rim 72 in the lateral parts 79 of the infra-spoke areas 77 can amount to 23 mm.

In the spoke attachment areas 76, the section of the rim 72 is of intermediate radial extent h5, as shown in FIGS. 39 and 40, which show sections carried out along the planes C-C and D-D, respectively, of FIG. 38. For example, the radial extent h5 of the rim 72 in the spoke attachment areas 76 can amount to 25 mm.

It should be understood that by intermediate value it is not meant that the differences in radial extent between h5 and h2 and between h5 and h3 are necessarily the same, as in the previous example, but simply that h2<h5<h3.

More specifically, in the lateral parts 79 of each infra-spoke area 77, the lower bridge 12 is thinner, in the central parts 78 of the infra-spoke areas 77 the lower bridge 12 is thicker, and in the spoke attachment areas 76 the lower bridge 12 has an intermediate thickness.

As can be seen in FIG. 37, the radial section of the rim 72 changes between the significant sections shown in FIGS. 39-42 and described above in an abrupt or sudden manner, but also in this case even substantially more gradual changes are possible.

The central parts 78 of the infra-spoke areas 77 have a moment of inertia, with respect to the neutral axis z, which is greater than the moment of inertia of the lateral parts 79 of each infra-spoke area 77 and greater than the moment of inertia of the spoke attachment areas 76, even if to a more limited extent.

There is therefore an improvement in the stiffness of the rim 72 in the central part 78 of the infra-spoke areas 77, caused precisely by the increased moment of inertia with respect to axis z due to the increased radial size of the rim 72 and to the increased thickness of the lower bridge 12 and therefore its increased mass, compared with the lateral parts 79 of the infra-spoke areas 77.

In the spoke attachment areas 76, the moment of inertia and therefore the stiffness of the rim 72 have intermediate values, suitable for the requirements of stiffness of the wheel 71.

The increased moment of inertia in the central part 78 of each infra-spoke area 77 allows the radial deformation of such areas and consequently of the entire infra-spoke areas 77, when the spokes 53, 54 are mounted between the rim 72 and the hub M2 and tensioned to make the wheel 71, to be reduced, with a consequent reduction of the daisy effect.

The rim 71 according to the seventh embodiment of the invention can be obtained as described above with reference to the first embodiment.

The change of radial extent described above could also be obtained through a change of length of the side walls, obtained in particular by hydroforming, similarly to the second, fourth and sixth embodiments.

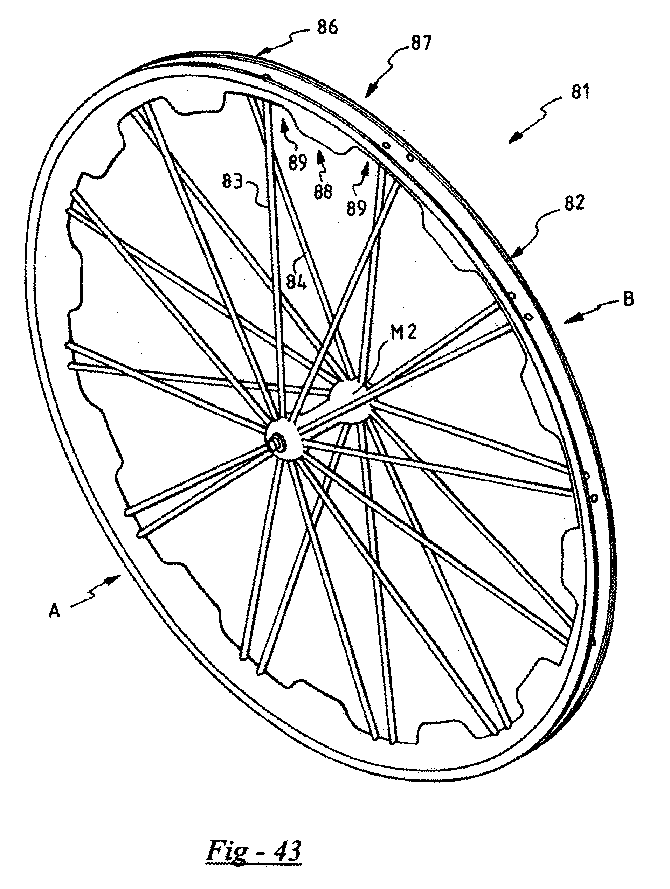

FIG. 43 shows a wheel 81 with a rim 82 according to an eighth embodiment of the invention.

The wheel 81 is a front wheel with twelve pairs of spokes 83, 84, tensioned between a hub M2 and twelve spoke attachment areas 86 of the rim 82. Between adjacent spoke attachment areas 86, the rim 82 has twelve infra-spoke areas 87, each having a central part 88 and two lateral parts 89.

The twelve spokes 83 extend radially from the hub M2 on the first side A, while the twelve spokes 84 extend radially from the hub M2 on the second side B.

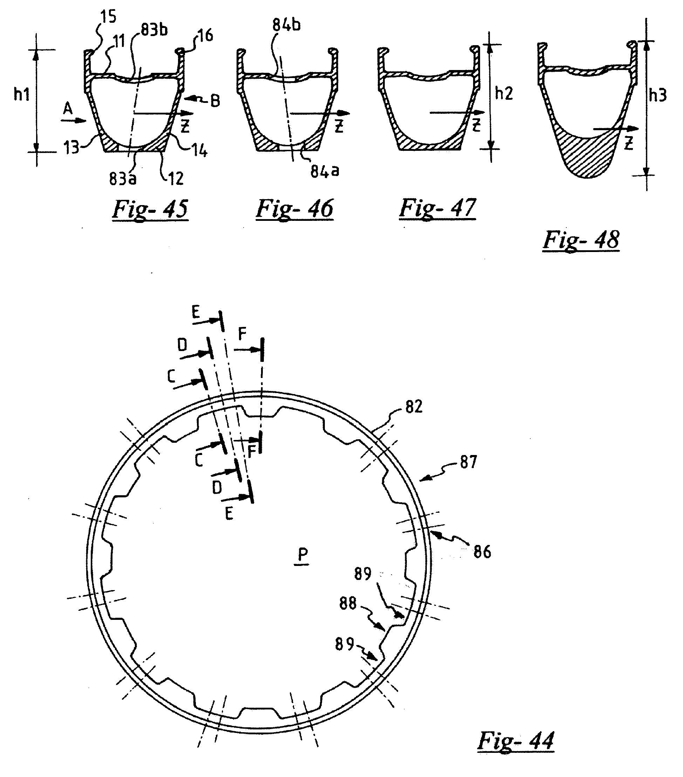

With reference to FIGS. 45-48, which show radial sections of the rim 82, respectively along the planes C-C, D-D, E-E, F-F of FIG. 44, the rim 82 has a variable radial section and more specifically has a change of thickness of the lower bridge 12.

In the spoke attachment areas 86, the rim 82 has a section of comparatively short radial extent h1. For example, the radial extent h1 of the rim 82 in the spoke attachment areas 86 can amount to 23.7 mm.

More specifically, in the spoke attachment areas 86 the rim 82 receives the spokes 83 on the first side A in respective holes 83a slightly sloping towards the first side A of the wheel 81, as shown in FIG. 45, and the spokes 84 in respective holes 84a slightly sloping towards the second side B of the wheel 81, as shown in FIG. 46.

The spoke attachment holes 83a, 84a are made in the lower bridge 12.

In the upper bridge 11 of the rim 72, coaxially with the holes 83a, 84a, openings 83b, 84b for the passage of the nipples used to attach and tension the spokes 83, 84 are optionally made.

Also in the lateral parts 89 of the infra-spoke areas 87, the rim 82 has a radial section of comparatively short radial extent h2, as shown in FIG. 47, which shows a section carried out along the plane E-E of FIG. 44. For example, the radial extent h2 of the rim 82 in the lateral parts 89 of the infra-spoke areas 87 can amount to 23.7 mm.

In the central parts 88 of the infra-spoke areas 87, the rim 82 has a radial section of comparatively long radial extent h3, for example 26 mm, as shown in FIG. 48, which shows a section carried out along the plane F-F of FIG. 44.

More specifically, in the lateral parts 89 of each infra-spoke area 87 and in the spoke attachment areas 86 the lower bridge 12 is thinner, and in the central parts 88 of the infra-spoke areas 87 the lower bridge 12 is thicker.

The radial extent h2 at the lateral parts 89 of the infra-spoke areas 87 is equal to the radial extent h1 at the spoke attachment areas 86, but this is not strictly necessary.

As can be seen in FIG. 43, the radial section of the rim 82 changes between the significant sections shown in FIGS. 45-48 and described above in a gradual manner, but alternatively it can change in a more or less abrupt manner.

The central parts 88 of the infra-spoke areas 87 have a moment of inertia, with respect to the neutral axis z, that is greater than the moment of inertia of the lateral parts 89 of the infra-spoke areas 87 and of the spoke attachment areas 86.

There is therefore an improvement in the stiffness of the rim 82 in the central parts 88 of the infra-spoke areas 87 caused precisely by the increased moment of inertia with respect to axis z due to the increased radial size of the rim 82 and to the increased thickness of the lower bridge 12 and therefore its increased mass, compared with the lateral parts 89 of the infra-spoke areas 87 and with the spoke attachment areas 86. The increased moment of inertia in the central part 88 of each infra-spoke area 87 allows the radial deformation in the entire infra-spoke areas 87, when the spokes 83, 84 are mounted between the rim 82 and the hub M2 and tensioned to make the wheel 81, to be reduced with a consequent reduction of the daisy effect.

The rim 81 according to the eighth embodiment of the invention can be obtained as described above with reference to the first embodiment.

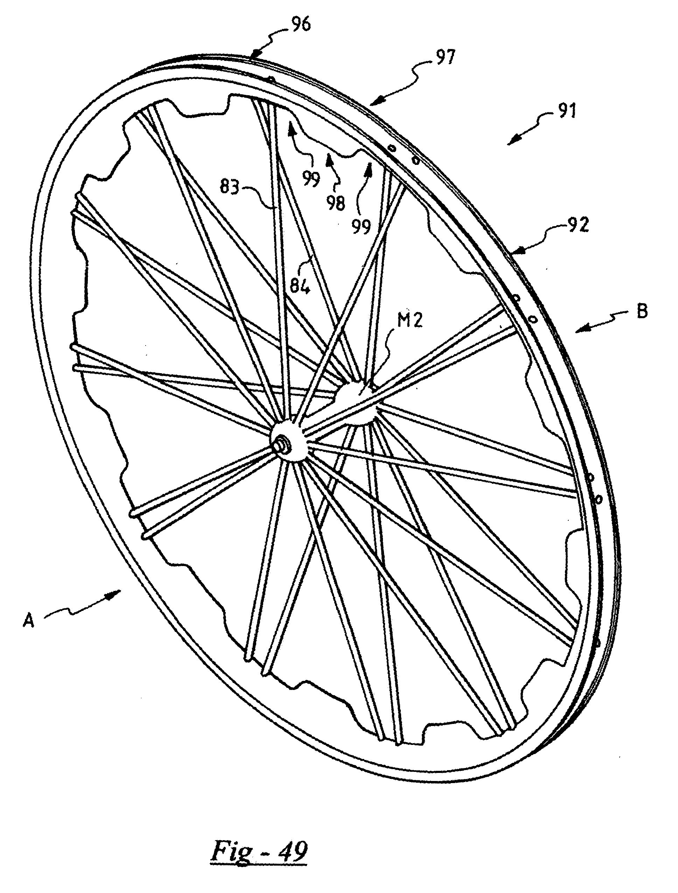

FIGS. 49-54 show views, corresponding to FIGS. 43-48, of a wheel 91 with a rim 92 according to a ninth embodiment of the invention, which shall only be described in what differs from the eighth embodiment.

The rim 92 has a radial section of variable moment of inertia in the terms described above with reference to the eighth embodiment. The change of moment of inertia is however obtain by deformation, in particular by hydroforming.

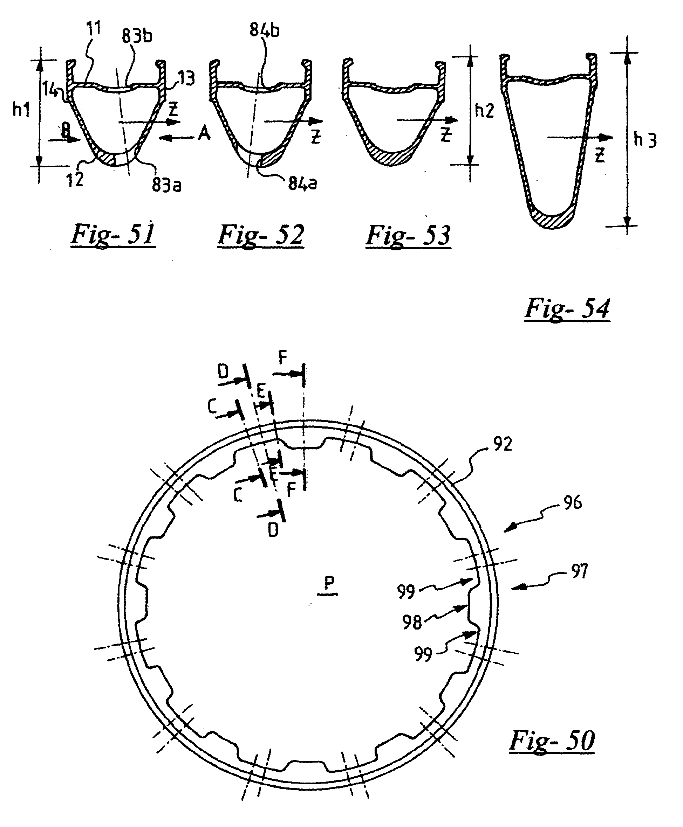

More specifically, in the central parts 98 of the infra-spoke areas 97 - FIG. 54, which shows a section along the plane F-F of FIG. 50 - the side walls 13, 14 are longer and less sloping than the lateral parts 99 of the infra-spoke areas 97 -FIG. 53, which shows a section along the plane E-E of FIG. 50 - and than the spoke attachment areas 96 - FIGS. 51 and 52, which show sections along the planes C-C and D-D of FIG. 50 -.

There is therefore an improvement in the stiffness of the rim 92 in the central parts 98 of the infra-spoke areas 97, caused by the increased moment of inertia with respect to axis z due to the increased radial extent h3 of the rim 92, compared with the lateral parts 99 of the infra-spoke areas 97 and with the spoke attachment areas 96.

The rim 92 has an area of the cross section - namely of the upper bridge 11, of the lower bridge 12 and of the side walls 13, 14 - that is substantially constant along the entire circumference, apart from the holes 83a, 84a themselves and the openings 83b, 84b where provided for. Therefore, the weight of the rim 92 is evenly distributed along the entire circumference.

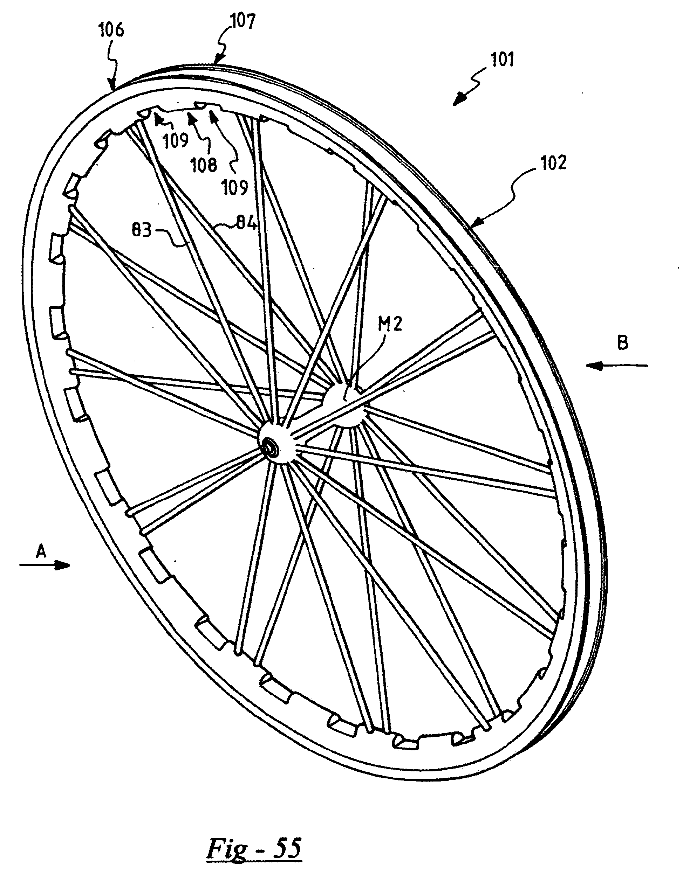

FIG. 55 shows a wheel 101 with a rim 102 according to a tenth embodiment of the invention.

The wheel 101 is a front wheel having the same spoking as the eighth and ninth embodiments described above. The wheel 101 indeed comprises twelve pairs of spokes 83, 84, tensioned between a hub M2 and twelve spoke attachment areas 106 of the rim 102. Between adjacent spoke attachment areas 106, the rim 102 has twelve infra-spoke areas 107, each having a central part 108 and two lateral parts 109.

The twelve spokes 83 extend radially from the hub M2 on the first side A, while the twelve spokes 84 extend radially from the hub M2 on the second side B.

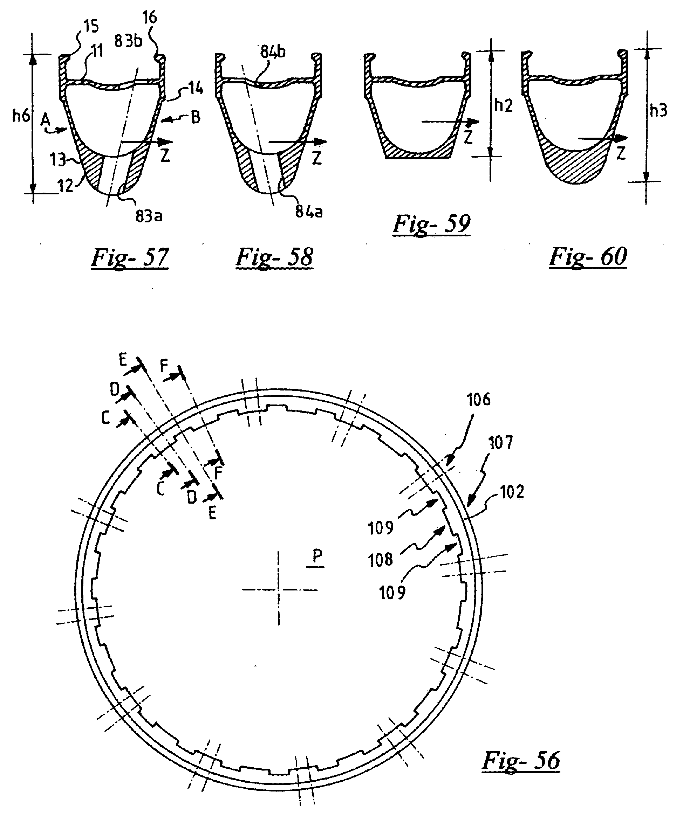

With reference to FIGS. 57-60, which show radial sections of the rim 102 respectively along the planes C-C, D-D, E-E, F-F of FIG. 56, the rim 102 has a variable radial section and more specifically has a change of thickness of the lower bridge 12.

In the lateral parts 109 of the infra-spoke areas 107, the rim 102 has a section of comparatively short radial extent h2, as shown in FIG. 59, which shows a section carried out along the plane E-E of FIG. 56. For example, the radial extent h2 of the rim 102 in the lateral parts 109 of the infra-spoke areas 107 can amount to 23 mm.

In the central parts 108 of the infra-spoke areas 107, the rim 102 has a radial section of longer radial extent h3 than the lateral parts 109 of the infra-spoke areas 107, as shown in FIG. 60, which shows a section carried out along the plane F-F of FIG. 56. For example, the radial extent h3 of the rim 102 in the central parts 108 of the infra-spoke areas 107 can amount to 25 mm.

In the spoke attachment areas 106, the section of the rim 102 has the maximum radial extent h6, as shown in FIGS. 57 and 58, which show sections carried out along the planes C-C and D-D respectively of FIG. 56. For example, the radial extent h6 of the rim 102 in the spoke attachment areas 106 can amount to 26 mm.

In general, values of the radial extents in the various areas such that h2<h3<h6 can be used.

More specifically, in the lateral parts 109 of each infra-spoke area 107, the lower bridge 12 is thinner, in the spoke attachment areas 106 the lower bridge 12 is thicker, and in the central parts 108 of the infra-spoke areas 107 the lower bridge 12 has an intermediate thickness.

As can be seen in FIG. 55, the radial section of the rim 102 changes between the significant sections shown in FIGS. 57-60 and described above in an abrupt or sudden manner, but also in this case even substantially more gradual changes are possible.

The central parts 108 of the infra-spoke areas 107 have a moment of inertia, with respect to the neutral axis z, that is greater than the moment of inertia of the lateral parts 109 of each infra-spoke area 107, even if less than the spoke attachment areas 106.

There is therefore an improvement in the stiffness of the rim 102 in the central part 108 of the infra-spoke areas 107, caused precisely by the increased moment of inertia with respect to axis z due to the increase in radial size of the rim 102 and to the increased thickness of the lower bridge 12 and therefore its increased mass, compared with the lateral parts 109 of the infra-spoke areas 107.

In the spoke attachment areas 106, the moment of inertia and therefore the stiffness of the rim 102 have maximum values, suitable for the requirements of stiffness of the wheel 101.

The increased moment of inertia in the central part 108 of each infra-spoke area 107 allows the radial deformation of such area and consequently of the entire infra-spoke areas 107, when the spokes 83, 84 are mounted between the rim 102 and the hub M2 and tensioned to make the wheel 101, to be reduced with a consequent reduction of the daisy effect.

The rim 101 according to the tenth embodiment of the invention can be obtained as described above with reference to the first embodiment.

The change of moment of inertia described above could also be obtained through a change of length of the side walls, obtained in particular by hydroforming, similarly to the second, fourth, sixth and ninth embodiment.

It should be understood that the changes of section and in particular the mutual relationships between the radial extents of the central and lateral parts of the infra-spoke areas and of the spoke attachment areas indicated in the various embodiments and in particular in the third, in the seventh and in the tenth embodiments can be carried out with any type of spoking. In other words, the radial extent (and/or the thickness of the lower bridge) of the spoke attachment areas can be selected as equal to either the radial extent of the central or lateral parts of the infra-spoke areas, intermediate between them, longer than the radial extent of the central parts of the infra-spoke areas, so as to change moment of inertia concordantly.

In the various embodiments described above, the spoke attachment holes can be centred with respect to the middle plane P of the rim and the possible openings for the insertion of the nipples can be displaced with respect to the middle plane, or vice-versa the spoke attachment holes can be displaced with respect to the middle plane of the rim, and the possible openings for the insertion of the nipples can be centred with respect to the middle plane.

As stated above, the transitions between the various significant sections of the rims according to the invention can be more or less abrupt. Just as an example, FIGS. 61-64 schematically show some possible shapes of transitions between areas 158 having a comparatively high moment of inertia, in particular the central parts of the infra-spoke areas, and areas 159 having a comparatively low moment of inertia, in particular the lateral parts of the infra-spoke areas, in the case of change of moment of inertia accomplished through changes of thickness of the lower bridge, like in the first, third, fifth, seventh, eighth and tenth embodiments.

In FIG. 61, the change of thickness from the area 158 to the area 159 is sudden or stepped.

In FIG. 62, the change of thickness from the area 158 to the area 159 takes place by ramp change along a length 160, the size of which shall be suitably selected based upon the diameter of the wheel and/or the number of spoke attachment areas.

In FIG. 63, the change of thickness from the area 158 to the area 159 is curvilinear, in particular it follows a cylindrical surface, along a length 161. Also in this case, the size of the length 161 and the radius of curvature shall be suitably selected based upon the diameter of the wheel and/or the number of spoke attachment areas.

In FIG. 64, the change of thickness from the area 158 to the area 159 takes place forming an undercut, along a sloping length 162.

It should be understood that the invention is applicable in the case of wheels and rims with any type of spoking, in other words with any number of spokes, be they arranged equally spaced apart or grouped in pairs, triplets or similar.

Those skilled in the art will understand that any other way of obtaining the change of moment of inertia according to the invention is encompassed by the present invention. In particular, it is possible to combine changes of radial extent obtained through a different length of the side walls with changes of radial extent obtained through changes of thickness of the lower bridge, for example by carrying out both a hydroforming process and a material removal process, typically by milling.

Moreover, it should be understood that the section of the rim could change with respect to the illustrated inverted A-shaped section, not only for the size relationships between the upper bridge, the lower bridge and the side walls and for the slopes of the side walls. For example, the upper bridge could be lacking, or alternatively the tyre holding wings could be lacking, the tyre in this case being glued to the upper bridge. Furthermore, the lower bridge could be lacking, the spoke attachment holes being made in the side walls. Moreover, there could be cross members for strengthening the rim. Finally, it should be understood that the rim can have a hole for receiving a tyre inflation valve.

As stated above, in the case of a metallic material, the rims of the second, fourth, sixth and ninth embodiments of the invention can advantageously be obtained with a manufacturing process described with reference to FIGS. 65-71, relative to a rim of the second embodiment of FIG. 7 just as an example.

With reference to FIG. 66, the manufacturing process firstly comprises the step of providing a tubular linear piece 200 of suitable length, in practice slightly greater than the final circumference of the wheel, obtained by extrusion of a cylindrical tubular element with predetermined area of the cross section. The area of the cross section of the extruded tubular linear piece 200 corresponds to the area of the section of the final rim that, as seen above in the description of the second, fourth, sixth and ninth embodiments, is constant along the entire rim. The cross section of the extruded tubular linear piece 200 is contained in the envelope of all the radial sections of the rim to be obtained, as shown by the section 201 with a continuous line in FIG. 65, where the significant sections 202, 203 of the rim 22, corresponding to those of FIGS. 9-12, are indicated with a broken line. In variants of the method, it can be provided for the cross section of the extruded tubular linear piece be equal to the most compact radial section of the rim, for example to the section 202 of FIG. 65.

With reference to FIG. 67, the extruded tubular linear piece 200 is wound on itself through a calendaring step to obtain a curved (helical) tubular element 204.

With reference to FIG. 68, the curved tubular element 204 is inserted inside a forming mould 205, formed of two half-moulds 206, 207 that make a cavity 208 having a shape matching the desired final shape of the rim.

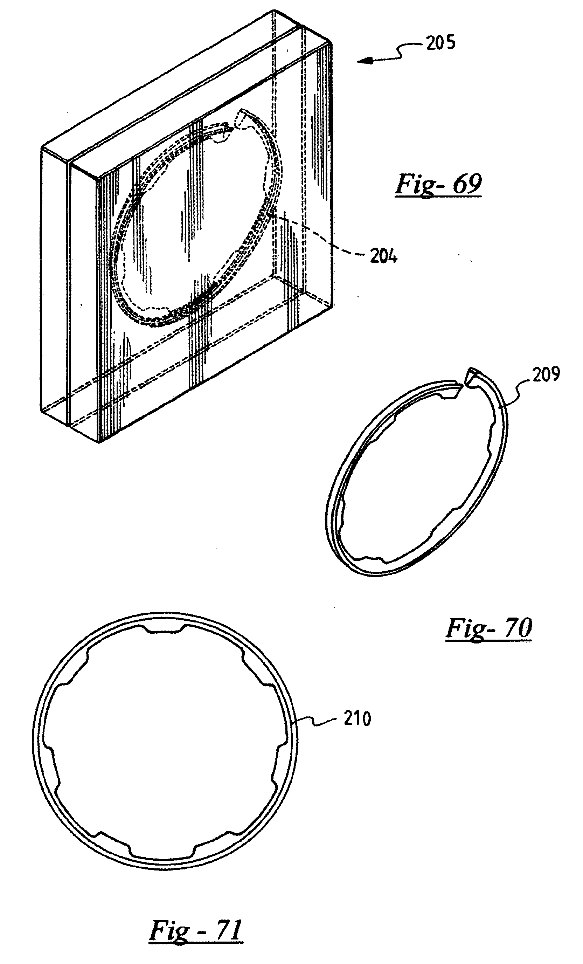

With reference to FIG. 69, the mould 205 is closed and a fluid, preferably oil, is injected under pressure inside the curved tubular element 204, preferably from one end of the curved tubular element 204, while the other end is closed. The push of the pressurised fluid in the curved tubular element 204 makes the curved tubular element 204 stick to the outer wall of the cavity 208 of the forming mould 205. The curved tubular element 204 thus plastically deforms taking on the desired shape and in particular the desired change of section, in any case preserving the constancy of the area of the section.

With reference to FIG. 70, the pressurised fluid is taken out from the curved tubular element 204, the mould 205 is opened and the hydroformed curved tubular element 209 is withdrawn.

With reference to FIG. 70, the ends of the hydroformed curved tubular element 209 are cut to the right size, juxtaposed and joined, for example by welding, to obtain the rim-shaped element 210 with the desired variable section, of constant area. Finally, the spoke attachment holes and possibly the openings for the passage of the nipples are made.

It should be understood that the sequence of the steps described above is subject to variants. In particular, the hydroforming step can be carried out before the rim winding or after joining the ends, and possibly after forming the spoke attachment holes and possible openings for the insertion of nipples. In the case of rims having both the upper bridge and the lower bridge, if the hydroforming step is subsequent to the joining, the pressurised liquid can be injected into the rim precursor through the spoke attachment holes, the openings for the insertion of nipples or an opening provided for a tyre inflation valve.

Hydroforming can be used, besides to make a rim with a change of radial section of the side walls as described above, also in order to make a rim with a different change of radial section, for example of the lower or upper bridge, and/or a rim with constant radial section, but non-circular shape.

The rims of the invention can also be obtained by moulding in a composite material. In this case it is sufficient to provide a mould having a suitably shaped mould cavity, and to arrange a suitable amount of material in the various regions of the mould cavity. A process of moulding rims from composite material is described, for example, in EP 1 231 077 A2.

## Claims

1. Rim (2, 22, 32, 42, 52, 62, 72, 82, 92, 102) for a bicycle spoked wheel, comprising spoke attachment areas (6, 26, 36, 46, 56, 66, 76, 86, 96, 106) and infra-spoke areas (7, 27, 37, 47, 57, 67, 77, 87, 97, 107), **characterised in that** the radial section of the rim in a central part (8, 28, 38, 48, 58, 68, 78, 88, 98, 108) of the infra-spoke areas (7, 27, 37, 47, 57, 67, 77, 87, 97, 107) has a greater moment of inertia than the radial section of the rim in lateral parts (9, 29, 39, 49, 59, 69, 79, 89, 99, 109) of the infra-spoke areas (7, 27, 37, 47, 57, 67, 77, 87, 97, 107).

2. Rim (2, 22, 52, 62, 72, 82, 92) according to claim 1, **characterised in that** the radial section of the rim in the central part (8, 28, 58, 68, 78, 88, 98) of the infra-spoke areas (7, 27, 57, 67, 77, 87, 97) has a greater moment of inertia than the radial section of the rim in the spoke attachment areas (6, 26, 56, 66, 76, 86, 96).

3. Rim (72) according to claim 2, **characterised in that** the radial section of the rim in the lateral parts (78) of the infra-spoke areas (77) has a smaller moment of inertia than the radial section of the rim in the spoke attachment areas (76).

4. Rim (2, 22, 52, 62, 82, 92) according to claim 2, **characterised in that** the radial section of the rim in the lateral parts (8, 28, 58, 68, 88, 98) of the infra-spoke areas (7, 27, 57, 67, 87, 97) has a moment of inertia equal to the radial section of the rim in the spoke attachment areas (6, 26, 56, 66, 86, 96).

5. Rim (32, 42) according to claim 1, **characterised in that** the radial section of the rim in the central part (38, 48) of the infra-spoke areas (37, 47) has a moment of inertia equal to the radial section of the rim in the spoke attachment areas (36, 46), apart from spoke attachment holes (33a, 34a, 35a) and possible nipple insertion openings (33b, 34b, 35b).

6. Rim (102) according to claim 1, **characterised in that** the radial section of the rim in the central part (108) of the spoke attachment areas (106) has a smaller moment of inertia than the radial section of the rim in the spoke attachment areas (106).

7. Rim (2, 32, 52, 72, 82, 102) according to any of claims 1-6, **characterised in that** the change of moment of inertia is accomplished through a change of thickness of the rim.

8. Rim (2, 32, 52, 72, 82, 102) according to claim 7, **characterised in that** the change of moment of inertia is accomplished through a change of thickness of a lower bridge (12) of the rim.

9. Rim (2, 32, 52, 72, 82, 102) according to claim 8, **characterised in that** the change of thickness from an area (158) having a comparatively high moment of inertia to an area (159) having a comparatively low moment of inertia is stepped.

10. Rim (2, 32, 52, 72, 82, 102) according to claim 8, **characterised in that** the change of thickness from an area (158) having a comparatively high moment of inertia to an area (159) having a comparatively low moment of inertia takes place forming an undercut (162).

11. Rim (2, 32, 52, 72, 82, 102) according to claim 8, **characterised in that** the change of thickness from an area (158) having a comparatively high moment of inertia to an area (159) having a comparatively low moment of inertia takes place by ramp change.

12. Rim (2, 32, 52, 72, 82, 102) according to claim 8, **characterised in that** the change of thickness from an area (158) having a comparatively high moment of inertia to an area (159) having a comparatively low moment of inertia is curvilinear.

13. Rim (2, 32, 52, 72, 82, 102) according to any of claims 7-12, **characterised in that** said change of thickness is carried out by removal of material.

14. Rim (2, 32, 52, 72, 82, 102) according to claim 13, **characterised in that** the removal of material is carried out by milling.

15. Rim (2, 32, 52, 72, 82, 102) according to any of claims 7-12, **characterised by** being made of a composite material and in that said change of thickness is carried out through input of a different amount of composite material in a suitably-shaped mould cavity.

16. Rim (22, 42, 62, 92) according to any of claims 1-6, **characterised in that** the change of moment of inertia is accomplished through a change of the radial extent of the rim.

17. Rim (22, 42, 62, 92) according to claim 16,
**characterised in that** the change of moment of inertia is accomplished through a change of radial section of the side walls (13, 14) of the rim.

18. Rim (22, 42, 62, 92) according to claim 16 or 17, **characterised in that** said change of size is carried out by hydroforming.

19. Rim according to any of claims 1-6, **characterised in that** the change of moment of inertia is accomplished through a change of the radial extent of the rim and a change of thickness of the rim.

20. Rim according to claim 19, **characterised in that** said change of extent is carried out by hydroforming and **in that** said change of thickness is carried out by removal of material.

21. Rim (2, 22, 32, 42, 52, 62, 72, 82, 92, 102) according to any of claims 1-20, **characterised in that** the radial section of the rim changes abruptly.

22. Rim (2, 22, 32, 42, 52, 62, 72, 82, 92, 102) according to any of claims 1-20, **characterised in that** the radial section of the rim gradually changes along the circumference.

23. Bicycle spoked wheel (1, 21, 31, 41, 51, 61, 71, 81, 91, 101), comprising a rim (2, 22, 32, 42, 52, 62, 72, 82, 92, 102) according to any of claims 1-22, a hub (M1, M2) and a plurality of spokes (3, 4, 5, 53, 54, 83, 84) extending and tensioned between the spoke attachment areas (6, 26, 36, 46, 56, 66, 76, 86, 96, 106) of the rim and the hub (M1, M2).
